# EUROPÄISCHE PATENTSCHRIFT

(11) **EP 3 724 758 B1**
(45) Veröffentlichungstag und Bekanntmachung des Hinweises auf die Patenterteilung: **12.05.2021**
(21) Anmeldenummer: 19710637.0
(22) Anmeldetag: 07.03.2019
(51) Int. Cl.: G06F 8/656, G06F 9/52

(54) **VERFAHREN ZUM DURCHFÜHREN EINES UPDATES EINER SOFTWAREAPPLIKATION IN EINEM GERÄT, DAS SICH IM BETRIEB BEFINDET, SOWIE GERÄT UND KRAFTFAHRZEUG**
METHOD FOR CARRYING OUT AN UPDATE TO A SOFTWARE APPLICATION IN A DEVICE WHICH IS OPERATING, AND DEVICE AND MOTOR VEHICLE
PROCÉDÉ POUR EXÉCUTER UNE MISE À JOUR D'UNE APPLICATION LOGICIELLE DANS UN APPAREIL QUI EST EN COURS DE FONCTIONNEMENT, AINSI QU'APPAREIL ET VÉHICULE AUTOMOBILE

(30) Priorität: 20.03.2018 DE 102018204188
(43) Veröffentlichungstag der Anmeldung: 21.10.2020
(73) Patentinhaber: Audi AG, 85045 Ingolstadt (DE)
(72) Erfinder: MUNDHENK, Philipp, 85635 Höhenkirchen-Siegertsbrunn (DE)
(86) Internationale Anmeldenummer: PCT/EP2019/055680
(87) Internationale Veröffentlichungsnummer: WO 2019/179779

(56) Entgegenhaltungen:
- WO-A1-01/84792
- WO-A1-94/01819
- US-A1- 2017 168 803

## Beschreibung

Die Erfindung betrifft ein Verfahren zum Durchführen eines Updates einer Softwareapplikation in einem Gerät. Das Gerät kann beispielsweise ein Smartphone oder ein Steuergerät eines Kraftfahrzeugs sein. Das Update wird im laufenden Betrieb des Geräts durchgeführt. Zu der Erfindung gehören auch ein Gerät, in welchem das erfindungsgemäße Verfahren durchgeführt werden kann, sowie ein Kraftfahrzeug mit einem solchen Gerät.

Sicherheitskritische Systeme, wie zum Beispiel Kraftfahrzeuge, durchlaufen deshalb strikte Prozesse zur Evaluierung und Zertifizierung. Diese stellen sicher, dass das System sicher (englisch: safe) ist und betrieben werden darf. Durch ein Update einer Softwareapplikation eines Geräts kann dessen Betrieb instabil oder unmöglich werden, falls es während des Updates zu einem Fehler kommt. Denn während eines Updates wird das System von einem sicheren in einen undefinierten Zustand überführt, bevor es dann wieder (nach erfolgreichem Update) den sicheren Zustand erreicht. In dem undefinierten Zustand während des Austauschs der Altversion der Software (Programmcode oder Binärcode) der Softwareapplikation durch eine Neuversion ist deshalb in der Regel ein sicherer Betrieb nicht möglich. Daher muss für ein Update eine entsprechende Offline-Zeit oder Betriebspause eingeplant werden. Diese Betriebspause kann von einigen Minuten bei einem verhältnismäßig kleinen System (zum Beispiel einer einzelnen Maschine in einer Fabrik) über Stunden (zum Beispiel bei einem vollständigen Update aller Softwareapplikationen eines Kraftfahrzeugs) bis hin zu Tagen (zum Beispiel bei einer Industrieanlage oder Fabrik) reichen. Auf diese Weise können deshalb für ein Update unerwünschte Kosten durch den Ausfall aufgrund der Betriebspause des Systems entstehen. Die für die Betriebspause notwendige Shutdown-Zeit und Startup-Zeit ist insbesondere bei größeren Systemen (zum Beispiel Industrieanlagen wie in einer Gießerei) nicht zu vernachlässigen.

So ist beispielsweise aus der DE 10 2016 201 279 A1 ein Verfahren zum Aktualisieren von Software in einem Kraftfahrzeug bekannt, wobei dieses Update nur durchgeführt wird, wenn das Kraftfahrzeug mit angezogener Handbremse oder verriegeltem Automatikgetriebe geparkt ist. Während des Updates kann das Kraftfahrzeug somit nicht für eine Fahrt genutzt werden. Aus der DE 10 2015 203 151 A1 ist ein Verfahren für eine Softwareaktualisierung innerhalb eines Kraftfahrzeugs bekannt, wobei eine Neuversion der Software einer Softwareapplikation zunächst in dem Kraftfahrzeug installiert wird und dann abgewartet wird, bis das Kraftfahrzeug einmal abgeschaltet und neu gestartet wird. Während des Fahrzeugneustarts wird dann anstelle der Altversion die Neuversion der Software verwendet. Somit muss auch hier für das Aktivieren einer Neuversion der Software einer Softwareapplikation der Betrieb des Kraftfahrzeugs einmal unterbrochen werden.

Aus der DE 101 05 454 A1 ist bekannt, Software in einem Kraftfahrzeug automatisch zu ergänzen, indem neue Softwaremodule in dem Kraftfahrzeug abgespeichert werden und dann im Betrieb des Kraftfahrzeugs die Softwaremodule vor ihrer Verwendung zunächst mithilfe von Testparametern getestet werden. Sind die Tests erfolgreich, kann ein Softwaremodul dann zum Bereitstellen zusätzlicher Funktionen freigeschaltet werden. Dieses Verfahren ermöglicht aber keinen Software-Austausch, d.h. eine Altversion einer Software im Betrieb durch eine Neuversion der Software zu ersetzen

Die WO 94/01819 offenbart überdies ein System zum Ändern von Software während des Rechnerbetriebs, und die WO 01/84792 offenbart ein Verfahren und Gateway für das Online-Austauschen von Software in einem Kommunikationssystem.

Der Erfindung liegt die Aufgabe zugrunde, in einem Gerät ein Update einer Softwareapplikation im laufenden Betrieb des Geräts zu ermöglichen.

Die Aufgabe wird durch die Gegenstände der unabhängigen Ansprüche gelöst. Vorteilhafte Ausführungsformen der Erfindung sind durch die abhängigen Ansprüche, die folgende Beschreibung sowie die Figuren beschrieben.

Durch die Erfindung ist ein Verfahren zum Durchführen eines Updates (Erneuerung) einer Softwareapplikation in einem Gerät bereitgestellt. Mit "Update" ist eine Aktualisierung oder Erneuerung einer Softwarekomponente oder eines Programmcodes oder Binärcodes der Softwareapplikation gemeint. Es wird also eine Altversion der Softwarekomponente durch eine Neuversion ersetzt. Die Softwarekomponente kann ein Teil der Softwareapplikation sein, also ein Programmteil, oder die gesamte Softwareapplikation darstellen. Eine Kurzbezeichnung für Softwarekomponente ist hier auch Software.

Das Gerät befindet sich während des Updates durchgehend im Betrieb. Bei dem Gerät kann es sich beispielsweise um ein mobiles Endgerät (z.B. ein Smartphone oder ein Tablet-PC oder eine Smartwatch) oder ein Steuergerät eines Kraftfahrzeugs oder einer Komponente einer Industrieanlage oder eine Computeranlage handeln, um nur Beispiele zu nennen.

Erfindungsgemäß wird eine in dem Betrieb des Geräts bereits laufende Altversion der Softwarekomponente der Softwareapplikation betrieben. Die Altversion sendet hierbei über eine Kommunikationseinrichtung Sendedaten an zumindest eine Fremdapplikation des Geräts oder eines anderen Geräts aus. Die Kommunikationseinrichtung kann beispielsweise einen Kommunikationsstack oder Protokollstack umfassen, beispielsweise den IP-Protokollstack (IP - Internet Protocol). Die Kommunikationseinrichtung stellt allgemein eine Kommunikationsschnittstelle der Softwarekomponente zu dem zumindest einen Fremdgerät bereit. Die Kommunikationseinrichtung kann Teil der Softwareapplikation sein. Die Softwareapplikation und die zumindest eine Fremdapplikation können eine jeweilige Applikation oder Funktionalität bereitstellen. Ein Beispiel für eine Softwareapplikation ist jeweils eine Medienwiedergabe (MP3-Wiedergabe, Videowiedergabe) und/oder eine Telefonie-Anwendung und/oder eine Navigationsanwendung. Während sich also das Gerät im Betrieb befindet und die Softwareapplikation aktiv ist, das heißt zumindest Sendedaten aussendet, wird währenddessen in einer Übergangsphase die Neuversion der Softwarekomponente in einem Speicher des Geräts abgespeichert oder installiert und danach ausgeführt, das heißt ebenfalls in Betrieb genommen. Es laufen dann die Altversion und die Neuversion gleichzeitig. Hierbei erzeugt die Neuversion dann ebenfalls Sendedaten. Die Sendedaten der Neuversion werden aber durch die Kommunikationseinrichtung blockiert. Damit werden die Sendedaten der Neuversion also nicht zu der zumindest einen Fremdapplikation weitergeleitet. Sie können stattdessen beispielsweise gelöscht und/oder auf ein Fehlerkriterium hin überprüft werden.

Nachdem die Neuversion einen vorbestimmten Synchronisationszustand bezüglich der Altversion eingenommen hat (die weiterhin betrieben wird und Sendedaten an die zumindest eine Fremdapplikation aussendet), werden noch während des Betriebs des Geräts durch die Kommunikationseinrichtung in einem Umschaltvorgang die Sendedaten der Altversion blockiert und die Sendedaten der Neuversion an die zumindest eine Fremdapplikation durchgelassen. Es erfolgt also eine Blockade der Sendedaten der Altversion und es wird die Blockade der Sendedaten der Neuversion aufgehoben. Zusätzlich oder alternativ zum Blockieren der Sendedaten der Altversion kann auch vorgesehen sein, die Altversion zu deaktivieren. Aus Sicht der zumindest einen Fremdapplikation wird insgesamt von der Altversion auf die Neuversion umgeschaltet. Da die Neuversion den Synchronisationszustand erreicht hat, stellen die Sendedaten der Neuversion eine Weiterführung des Betriebs der Softwareapplikation dar, das heißt aus Sicht der zumindest einen Fremdapplikation wird die Softwareapplikation durchgehend oder nahtlos weiterbetrieben. Es ändert sich nur die Quelle für die Sendedaten. Der Synchronisationszustand stellt also zumindest sicher, dass trotz des Umschaltens der Sendedaten der Altversion und auf diejenigen der Neuversion ein durchgehender, fehlerfreier Betrieb der zumindest einen Fremdapplikation möglich ist.

Durch die Erfindung ergibt sich der Vorteil, dass das Gerät während des Updates durchgehend in Betrieb bleiben kann und hierbei auch die Softwareapplikation an sich durchgehend betrieben wird, also die Funktionalität der Softwareapplikation durchgehend im Betrieb bereitgestellt wird, während hierbei aber die Softwarekomponente oder der Programmcode oder Binärcode der Softwareapplikation ausgetauscht wird, das heißt die Altversion durch die Neuversion ersetzt wird. Nach dem Umschaltvorgang kann dann die Altversion in dem Gerät gelöscht werden.

Die Erfindung umfasst auch Ausführungsformen, durch die sich zusätzliche Vorteile ergeben.

Gemäß einer Ausführungsform empfängt die Kommunikationseinrichtung aus der zumindest einen Fremdapplikation Empfangsdaten. Es handelt sich also um Sendedaten der zumindest einen Fremdapplikation, die natürlich aus Sicht der Softwareapplikation Empfangsdaten darstellen. Die Kommunikationseinrichtung leitet die Empfangsdaten sowohl an die Altversion als auch an die Neuversion weiter. Somit kann also die Altversion weiterhin ihre Funktionalität ununterbrochen bereitstellen, während die Neuversion auf den Kommunikationsvorgang zwischen der zumindest einen Fremdapplikation einerseits und der Altversion andererseits aufsynchronisieren kann.

In Bezug auf den zu erreichenden Synchronisationszustand der Neuversion sieht eine Ausführungsform vor, dass der Synchronisationszustand umfasst, dass vorbestimmte Zustandsdaten der Neuversion korrespondierenden Zustandsdaten der Altversion gemäß einem vorbestimmten Übereinstimmungskriterium entsprechen. Die Zustandsdaten der Neuversion beschreiben einen inneren Zustand der Neuversion. Das Übereinstimmungskriterium legt fest, wie weit die Zustandsdaten der Neuversion den entsprechenden Zustandsdaten der Altversion entsprechen müssen, damit der Synchronisationszustand erreicht ist. Es kann durch das Übereinstimmungskriterium eine vollständige Übereinstimmung gefordert sein (Identität). Es kann aber auch eine vorbestimmte Toleranz in Bezug auf Abweichungen zwischen den Zustandsdaten der Neuversion und der Altversion definiert sein. Hierdurch kann dann in vorteilhafter Weise der Synchronisationszustand früher erreicht werden als bei einer vollständigen Identität der Zustandsdaten. Ein Vergleich der Zustandsdaten kann aktiv in dem Gerät erfolgen, indem die Zustandsdaten der Altversion mit den Zustandsdaten der Neuversion verglichen werden. Es kann aber auch vorgesehen sein, dass bereits vor dem Update zum Beispiel in einem Testgerät ermittelt wird, nach welcher Zeitdauer z.B. ab Inbetriebnahme der Neuversion die Zustandsdaten einander entsprechen, also der Synchronisationszustand eingenommen wird. Beispielsweise kann dann entsprechend in dem Gerät für eine vorbestimmte Wartezeit die Neuversion betrieben werden. Ist dann bekannt, dass nach dieser Wartezeit der Synchronisationszustand eingenommen ist, kann ohne Prüfung in dem Gerät selber der Umschaltvorgang eingeleitet oder durchgeführt werden.

Eine Ausführungsform sieht vor, dass der Synchronisationszustand umfasst, dass die Neuversion gemäß einem vorbestimmten Prüfkriterium fehlerfrei läuft. Es kann also ein Test der Neuversion zur Laufzeit in dem Gerät erfolgen. Das Prüfkriterium kann umfassen, dass die Neuversion Sendedaten eines vorbestimmten Inhalts erzeugen muss und/oder eine vorbestimmte Sollreaktion auf bestimmte Empfangsdaten zeigen oder aufweisen muss. Es können dann solche bestimmten Empfangsdaten als Testdaten in die Neuversion eingespeist werden und deren Reaktion mit der vorbestimmten Sollreaktion verglichen werden. Bei Übereinstimmung ist dann der Synchronisationszustand erreicht. Hierbei ergibt sich der Vorteil, dass der Umschaltvorgang nur bei fehlerfrei laufender Neuversion erfolgt.

Eine Ausführungsform sieht vor, dass der Synchronisationszustand eingestellt wird, indem Initialisierungsdaten der Altversion in die Neuversion übertragen werden. Mit anderen Worten wird die Neuversion z.B. bei deren Inbetriebnahme oder Start oder auch später im laufenden Betrieb mit Initialisierungsdaten der Altversion konfiguriert, wodurch dann die Neuversion in vorteilhafter Weise den Betriebszustand der Altversion direkt übernimmt. Zusätzlich oder alternativ dazu kann vorgesehen sein, dass ein passiver Betrieb der Neuversion durchgeführt wird. Der passive Betrieb umfasst, dass die Sendedaten der Neuversion weiterhin blockiert sind, wie dies beschrieben wurde, und hierbei die Neuversion dieselben Eingangsdaten erhält wie die Altversion. Unter Eingangsdaten sind hierbei die besagten Empfangsdaten der zumindest einen Fremdapplikation und/oder vorbestimmte Sensordaten von mit der Softwareapplikation gekoppelten Sensoren gemeint. In dem passiven Betrieb gleicht dann die Neuversion ihren inneren Zustand an demjenigen der Altversion anhand der Eingangsdaten an. Mit anderen Worten beobachtet die Neuversion die Eingangsdaten, wie sie auch auf die Altversion einwirken. Die Neuversion reagiert dann auf die Eingangsdaten in derselben Weise wie die Altversion, wodurch sie ihren inneren Zustand an denjenigen der Altversion angleicht. Diese Ausführungsform weist den Vorteil auf, dass die Neuversion selbstständig auf den aktuellen Zustand einer Umgebung der Softwareapplikation reagiert.

Die Erfindung sieht überdies vor, dass auch in der zumindest einen Fremdapplikation ebenfalls eine jeweilige Neuversion einer dort betriebenen Softwarekomponente gespeichert und danach ausgeführt wird. Mit anderen Worten wird auch in der zumindest einen Fremdapplikation jeweils ein Update von der Softwarekomponente dieser Fremdapplikation durchgeführt. Auch durch eine dortige Kommunikationseinrichtung werden in der beschriebenen Weise ebenfalls in einer dortigen Übergangsphase die Sendedaten einer Altversion der dortigen Softwarekomponente weiterhin durchgelassen und die Sendedaten der Neuversion blockiert. Zu beachten ist hierbei, dass diese Sendedaten der Softwarekomponente der zumindest einen Fremdapplikation aus Sicht der bereits beschriebenen Softwareapplikation die Empfangsdaten darstellen können, wenn sie an die Softwareapplikation gesendet werden. Es gibt also auch in der zumindest einen Fremdapplikation die beschriebene Übergangsphase, in welcher eine Neuversion parallel oder gleichzeitig zu einer Altversion betrieben wird und hierbei aber die Sendedaten der Neuversion durch eine jeweilige Kommunikationseinrichtung blockiert werden. Falls sich die Softwareapplikation und die zumindest eine Fremdapplikation auf demselben Gerät befinden, können sie auch eine gemeinsame Kommunikationseinrichtung nutzen. Es gibt also mehrere gleichzeitig laufende Übergangsphasen, eine in der zuerst beschriebenen Softwareapplikation und jeweils eine in der zumindest einen Fremdapplikation.

Es ist des Weiteren vorgesehen, dass erst, wenn alle Neuversionen den Synchronisationszustand eingenommen haben, alle Kommunikationseinrichtungen oder jede Kommunikationseinrichtung den beschriebenen Umschaltvorgang durchführen. Es wird also zeitgleich sowohl in der Softwareapplikation als auch in der zumindest einen Fremdapplikation von der Altversion auf die Neuversion umgeschaltet, was das Durchlassen von deren Sendedaten angeht. Hierdurch ergibt sich der Vorteil, dass beim Entwickeln einer Neuversion keine Rücksicht auf die Altversionen der Fremdversionen genommen werden muss, da diese ebenfalls ausgetauscht werden.

Insbesondere sieht die Erfindung hierbei vor, dass die Sendedaten der Altversionen einerseits und die Sendedaten der Neuversionen andererseits zueinander inkompatibel sind. Die Sendedaten können beispielsweise ein anderes Datenformat (z.B. "float" statt "integer") und/oder ein anderes Kommunikationsprotokoll vorsehen. Mit anderen Worten können die Altversionen einerseits und die Neuversionen andererseits eine andere Kommunikationsschnittstelle aufweisen. Dennoch ist ein Update im laufenden Betrieb des Geräts möglich.

Eine Ausführungsform sieht vor, dass vor dem Update außerhalb des Geräts eine Sicherheitsverifikation der beschriebenen Übergangsphase durchgeführt wird. Die Sicherheitsverifikation kann beispielsweise nach dem Standard ISO 26262 (ASIL - Automotive Safety Integrity Level) und/oder nach dem Standard IEC 61508 erfolgen. Weitere anwendbare Normen sind DO178 (für Avionics), EN62304(für Medical Devices / Medizinische Geräte) und/oder EN50155 (für Railway / Bahn). Es gibt aber noch weitere Normen für weitere Bereiche, die der Fachmann hier heranziehen kann. Nach der Sicherheitsverifikation kann dann das Update in dem Gerät durchgeführt werden, und es ist auch für die Übergangsphase sichergestellt, dass das Gerät als sicheres System gewertet werden kann oder betrieben wird. Es kommt also nicht zu dem eingangs beschriebenen undefinierten Zustand während der Übergangsphase.

Die Erfindung stellt auch ein Gerät bereit, welches während eines Updates durchgehend betrieben werden kann. Das Gerät weist eine Prozessoreinrichtung zum Betreiben zumindest einer Softwareapplikation auf. Das Gerät ist hierbei dazu eingerichtet, eine Ausführungsform des erfindungsgemäßen Verfahrens durchzuführen. Die Prozessoreinrichtung kann hierzu zumindest einen Mikroprozessor und/oder zumindest einen Mikrocontroller aufweisen. Die zumindest eine Softwareapplikation kann durch eine Softwarekomponente oder einen Programmcode oder Binärcode realisiert sein, der in einem Datenspeicher der Prozessoreinrichtung gespeichert sein kann. In dem Gerät kann auch in der beschriebenen Weise zumindest eine Fremdapplikation (also eine von der jeweiligen Softwareapplikation verschiedene weitere Softwareapplikation) vorgesehen oder bereitgestellt sein. Bei dem Gerät kann es sich um ein Smartphone oder allgemein ein mobiles Endgerät handeln. Bei dem Gerät kann es sich auch um einen Servercomputer zum Bereitstellen eines Serverdienstes im Internet oder um einen Personal-Computer handeln. Bei dem Gerät kann es sich auch um ein Steuergerät für eine Komponente einer Industrieanlage handeln. Bei dem Gerät kann es sich um ein Steuergerät für ein Kraftfahrzeug handeln.

In Bezug auf die Verwendung der Erfindung in einem Kraftfahrzeug sieht die Erfindung auch ein Kraftfahrzeug mit zumindest einer Ausführungsform des erfindungsgemäßen Geräts vor. In dem Kraftfahrzeug kann das zumindest eine Gerät jeweils beispielsweise als ein Steuergerät ausgeführt sein. Das erfindungsgemäße Kraftfahrzeug ist bevorzugt als Kraftwagen, insbesondere als Personenkraftwagen oder Lastkraftwagen, ausgestaltet.

Die Erfindung umfasst auch die Kombinationen der beschriebenen Ausführungsformen.

Im Folgenden sind Ausführungsbeispiele der Erfindung beschrieben. Hierzu zeigt:
- Fig. 1: eine schematische Darstellung einer Ausführungsform des erfindungsgemäßen Geräts, in welchem eine Ausführungsform des erfindungsgemäßen Verfahrens durchgeführt wird; und
- Fig. 2: eine schematische Darstellung einer Ausführungsform des erfindungsgemäßen Geräts, in welchem eine weitere Ausführungsform des erfindungsgemäßen Verfahrens durchgeführt wird.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

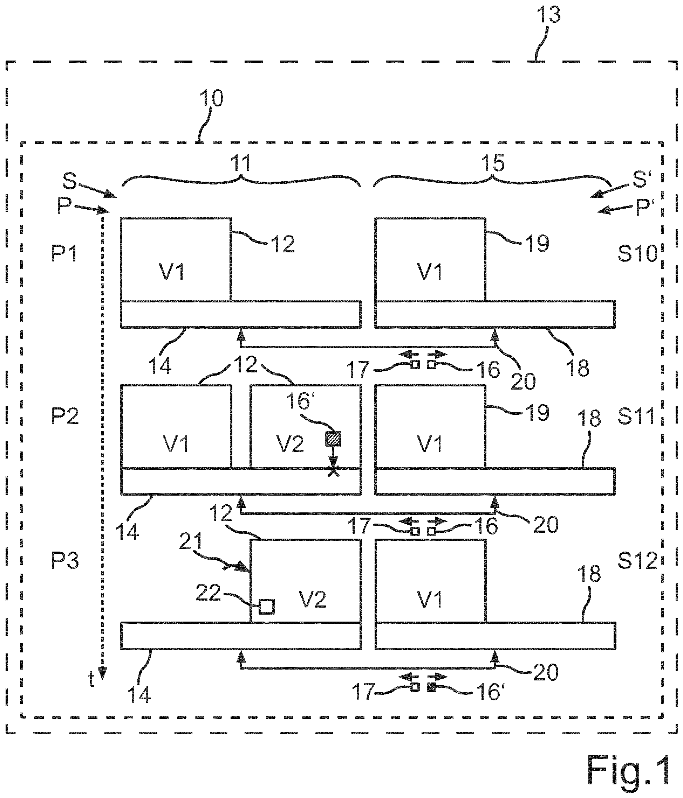

Fig. 1 zeigt ein Gerät 10, in welchem eine Softwareapplikation 11 mit einer Software oder Softwarekomponente 12 bereitgestellt sein kann. Das Gerät 10 kann beispielsweise in einem Kraftfahrzeug 13 eingebaut sein oder beispielsweise als mobiles Endgerät oder als Steuergerät für eine Maschine in einer Industrieanlage ausgestaltet sein.

Die Softwareapplikation 11 kann des Weiteren eine Kommunikationseinrichtung 14 aufweisen oder mit einer solchen Kommunikationseinrichtung 14 gekoppelt sein. Über die Kommunikationseinrichtung 14 kann die Softwareapplikation 11 dabei mit einer Fremdapplikation 15 kommunizieren, das heißt Sendedaten 16 an die Fremdapplikation 15 aussenden und Empfangsdaten 17 aus der Fremdapplikation 15 empfangen. Die Fremdapplikation 15 kann hierbei ebenfalls eine Kommunikationseinrichtung 18 aufweisen oder mit einer solchen Kommunikationseinrichtung 18 gekoppelt sein. Die Kommunikationseinrichtungen 14, 18 können beispielsweise auf der Grundlage eines Protokollstacks oder Kommunikationsstacks und/oder einer Netzwerkkarte für ein Computernetzwerk realisiert sein. Auch die Fremdapplikation 15 kann eine Softwarekomponente 19 aufweisen.

Die jeweilige Softwarekomponente 12, 19 kann jeweils in einem Speicher S, S' gespeichert sein. Die Softwarekomponente 12, 19 kann jeweils durch eine Prozessoreinrichtung P, P' ausgeführt werden. Falls die Softwareapplikation 11 und die Fremdapplikation 15 im selben Gerät 10 betrieben werden, können hierbei die Prozessoreinrichtungen P, P' auch identisch sein, also durch ein und dieselbe Prozessoreinrichtung realisiert sein.

In Fig. 1 ist veranschaulicht, dass die Fremdapplikation 15 in demselben Gerät 10 betrieben werden kann wie die Softwareapplikation 11. Es kann aber auch vorgesehen sein, dass die Fremdapplikation 15 oder eine weitere Fremdapplikation, mit welcher die Softwareapplikation 11 kommuniziert, in einem anderen Gerät (nicht dargestellt) kommuniziert. Die Kommunikation kann über eine Kommunikationsverbindung 20 erfolgen, die beispielsweise das besagte Kommunikationsnetzwerk oder Datennetzwerk umfassen kann und/oder innerhalb eines Geräts 10 auch beispielsweise über eine Shared-Memory-Verbindung erfolgen kann.

Die Fig. 1 zeigt für die Softwareapplikation 11 über der Zeit t drei unterschiedliche Phasen eines Updates der Softwarekomponente 12 der Softwareapplikation 11, also eines Updaten von zumindest einem Teil von deren Programmcode oder Binärcode. Bei den Phasen handelt es sich um eine erste Phase P1, eine Übergangsphase P2 und eine abschließende Phase P3.

In der Phase P1 wird hierbei jeweils von der Softwarekomponente 12, 19 eine Altversion V1 betrieben. Für die Softwareapplikation 11 soll aber mittels des Updates eine Neuversion V2 der Softwarekomponente installiert werden.

Hierbei muss aber der Betrieb des Geräts 10 nicht unterbrochen werden, das heißt die durch die Softwareapplikation 11 bereitgestellte Funktionalität kann durchgehend während des Updates bereitgestellt oder ausgeführt werden.

Für das Update kann hierzu in einem Schritt S10 im Betrieb des Geräts 10 die bereits laufende Altversion V1 der Softwarekomponente 12 der Softwareapplikation 11 betrieben werden. Hierbei kann dann die Altversion V1 über die Kommunikationseinrichtung 14 Sendedaten 16 an zumindest eine Fremdapplikation 15 des Geräts 10 oder eines anderen Geräts aussenden.

In der Übergangsphase P2 wird in einem Schritt S11 des Updates die Neuversion V2 der Softwarekomponente 12 in einen Speicher des Geräts 10 abgespeichert und danach ausgeführt oder betrieben. Mit anderen Worten wird die Neuversion V2 in Betrieb genommen. Es laufen dann in der Übergangsphase P2 gleichzeitig oder parallel die Altversion V1 und die Neuversion V2 der Softwarekomponente 12. Sendedaten 16' der Neuversion V2, welche diese vergleichbar mit der Altversion V1 im Betrieb erzeugt, werden aber durch die Kommunikationseinrichtung 14 blockiert. Die Fremdapplikation 15 empfängt somit weiterhin über die Kommunikationsverbindung 20 lediglich die Sendedaten 16 der Altversion.

In der Phase P3 wird in einem Schritt S12 des Updates ein Umschaltvorgang 21 durchgeführt, wenn die Neuversion V2 einen vorbestimmten Synchronisationszustand 22 eingenommen hat oder aufweist. Durch den Umschaltvorgang 21 werden noch während des Betriebs des Geräts 10 durch die Kommunikationseinrichtung 14 die Sendedaten 16 der Altversion blockiert und/oder die Altversion V1 deaktiviert. Zusätzlich werden die Sendedaten 16' der Neuversion V2 an die zumindest eine Fremdapplikation 15 durchgelassen. Es wird also die Blockade der Sendedaten 16' der Neuversion V2 aufgehoben.

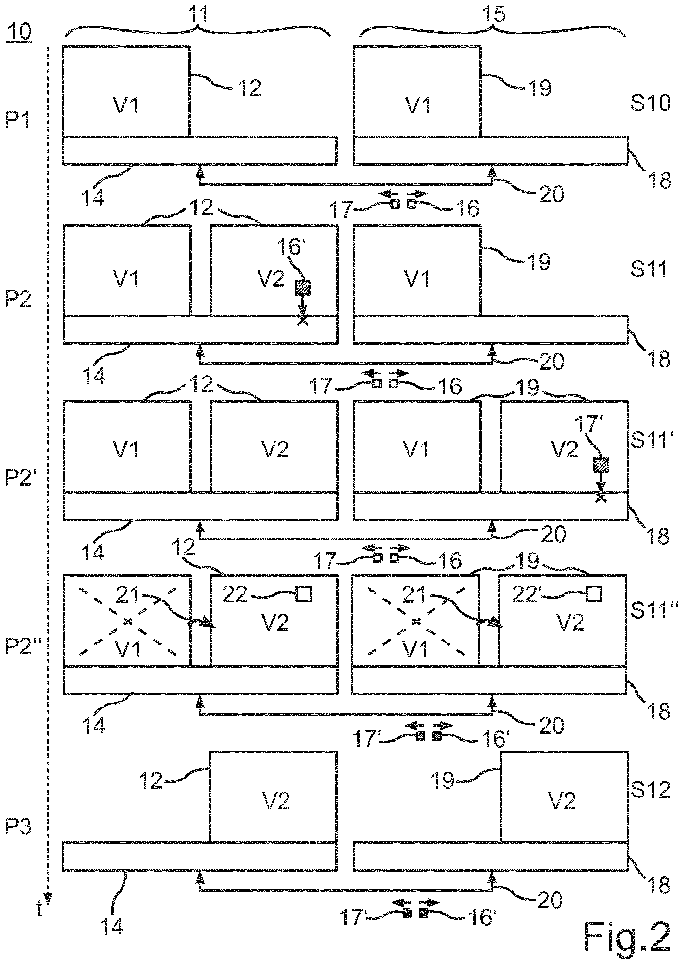

Fig. 2 zeigt, wie auch für den Fall, dass das Update bedingt, dass die Sendedaten 16, 16' inkompatibel sind, in dem Gerät 10 ein Update mit Phasen P1, Übergangsphasen P2, P2', P2" und einer Phase P3 dennoch im laufenden Betrieb des Geräts 10 durchgeführt werden kann.

Auch das Update mit inkompatiblen Sendedaten 16, 16' und optional inkompatiblen Empfangsdaten 17, 17', kann mit dem Schritt S10 beginnen, in welchem von der Softwarekomponente 12 der Softwareapplikation 11 und der Softwarekomponente 19 der Fremdapplikation 15 jeweils die Altversion V1 betrieben wird.

Im Schritt S11 kann dann in der beschriebenen Weise die Neuversion V2 der Softwarekomponente 12 abgespeichert und in Betrieb genommen werden. Die Sendedaten 16' der Neuversion V2 werden dabei durch die Kommunikationseinrichtung 14 blockiert.

Im Schritt S11' der Übergangsphase P2' kann dann für die Fremdapplikation 15 die Neuversion V2 von deren Softwarekomponente 19 installiert oder abgespeichert werden und danach in Betrieb genommen werden oder ausgeführt werden. Hierbei kann vorgesehen sein, dass durch die Kommunikationseinrichtung 18 auch die Sendedaten 17' der Neuversion V2 der Softwarekomponente 19 blockiert werden. Diese Sendedaten können Empfangsdaten aus Sicht der Softwareapplikation 11 entsprechen, wenn sie dorthin gesendet werden. Die Schritte S11 und S11' können auch in umgekehrter Reihenfolge, gleichzeitig oder teilweist überlappend stattfinden.

In einem Schritt S11" des Updates kann für die Übergangsphase P2" dann in der Softwareapplikation 11 und in der Fremdapplikation 15 der Umschaltvorgang 21 erfolgen, sobald die jeweilige Neuversion V2 den Synchronisationszustand 22, 22' bezüglich der jeweiligen Altversion V1 aufweisen.

Hierdurch werden dann die jeweiligen Sendedaten 16', 17' durch die jeweilige Kommunikationseinrichtung 14, 18 nicht mehr blockiert, sondern über die Kommunikationsverbindung 20 übertragen. Zu beachten ist, das Sendedaten der Neuversion V2 der zumindest einen Fremdkomponenten dann die Empfangsdaten 17' der Softwareapplikation 11 darstellen können. Zeitgleich kann durch den Umschaltvorgang die jeweilige Altversion V1 deaktiviert werden oder zumindest ihre Sendedaten, das heißt die Sendedaten 16 und die Empfangsdaten 17, blockiert werden.

In einem abschließenden Schritt S12 kann in der Phase P3 dann der Betrieb ausschließlich mit den Neuversionen V2 fortgeführt werden und die Altversionen V1 können deinstalliert oder gelöscht werden.

Anstatt also ein Update in einem einzigen Schritt durchzuführen, wird das Update in mehrere Phasen aufgeteilt, dessen Sicherheit einzeln verifiziert werden kann. Die Basis für diese Idee bildet ein Mechanismus für Software-Redundanz.

Mit einem solchen Mechanismus können mehrere Softwarekomponenten mit der gleichen Version parallel betrieben werden. Die eingehenden und ausgehenden Daten werden vom Redundanzmechanismus einer Kommunikationseinrichtung koordiniert. Ein solcher Mechanismus wird erweitert, um auch Softwarekomponente mit unterschiedlichen Versionen parallel betreiben zu können. Zusätzlich wird ein Prozess definiert, welcher es erlaubt, die einzelnen Phasen eines Updates zu trennen.

Diese Vorgehensweise erlaubt es, ein Update in mehrere Phasen zu trennen und diese einzelnen Phasen und deren Übergänge auf ihre Sicherheit zu evaluieren und zu verifizieren. Dies erlaubt das Update von sicherheitskritischen Systemen im Betrieb.

Da hierbei die Komponenten zusätzlich zum existierenden System lauffähig sein sollen, ist es bevorzugt, dass das System, welches ein Update einer Komponente erhalten soll, ausreichend Leistung zur Verfügung stellen kann um die Komponenten parallel auszuführen.

In Fig. 1 wird ein vereinfachtes System gezeigt, in welchem eine Softwarekomponente ein Update erhält. Die Schnittstelle der Kommunikation der zu updatenden Softwarekomponente bleibt dabei gleich. Es erfolgt lediglich ein Update der internen Logik (z.B. ein sogenanntes Bugfix). Ausgangspunkt ist das ursprüngliche, sichere System der Altversion V1. In der nächsten Phase wird zuerst parallel/gleichzeitig zur existenten Softwarekomponente 12 in Version V1, die neue Version V2 dieser Softwarekomponente installiert. Die Kommunikation wird dabei über einen zentralen Zugriffspunkt (z.B. Middleware, Kommunikationskanal) gesteuert. Dieser steuert die Kommunikation wie folgt:
In Phase P1 wird die Kommunikation wie bekannt zwischen den Komponenten 12 und 19, jeweils in Version V1 aufrecht erhalten

In Übergangsphase P2, nach erfolgtem Laden von Softwarekomponente 12 Version V2, wird die Kommunikation auf diese Softwarekomponente 12 umgestellt. D.h. alle Inputs werden an diese Softwarekomponente geliefert und alle Outputs werden von dieser Softwarekomponente 12 übernommen. Typischerweise ist es auch erforderlich, dass der interne Zustand von Softwarekomponente 12 Version V2 mit dem internen Zustand von Version V1 synchronisiert ist. Diese Synchronisierung ist applikationsspezifisch und kann durch die Initialisierung beim Start der Softwarekomponente erfolgen, oder durch den längeren parallelen und passiven Betrieb der Softwarekomponente auf dem System des Geräts. Hierbei werden die Inputs an die Softwarekomponente 12, Version V2 zugestellt, die Outputs aber vorerst nicht weiter verarbeitet. Erst nach erfolgter Synchronisierung erfolgt die Umstellung.
- In Phase P3 erfolgt dann nur noch die Entfernung von Softwarekomponente 12 Version V1. Es werden keine Änderungen an der Kommunikation vorgenommen

In Fig. 2 ist gezeigt, wie ein Update durchgeführt wird, wenn sich die Schnittstelle zwischen zwei Softwarekomponenten 12, 19 inkompatibel ändert. In diesem Fall wird das Update der Softwarekomponenten einzeln durchgeführt. Wichtig ist hierbei die Kommunikation zwischen den Softwarekomponenten zu beachten. Da sich diese ändert (inkompatibles Interface) ist ein zusätzlicher Schritt in der Umstellung erforderlich. Die Kommunikation wird dabei erst in Phase P3 umgestellt, wenn die neuen Versionen der Softwarekomponenten synchronisiert sind. Aus Fig. 2 lässt sich auch herleiten, dass für eine beliebige Anzahl weiterer abhängiger Softwarekomponenten mit inkompatiblen Schnittstellen die Updates in entsprechender Weise durchgeführt werden können. In diesem Fall werden zuerst alle abhängigen Softwarekomponenten geupdated, bevor die Umschaltung auf die neue Kommunikation erfolgt.

Die einzelnen Phasen des Updates, wie oben definiert, können nun unabhängig auf ihre Sicherheit (Safety) verifiziert werden. Da an den Übergängen zwischen den Phasen keine Änderungen stattfinden, sondern nur in den Phasen und der Betrieb auch während eines Phasenwechsels konstant ermöglicht wird (durch Verdopplung der Softwarekomponenten), ist es ausreichend, die Phasen zu verifizieren.

Ein zentrales Element des Systems ist der Kommunikationsmechanismus, welcher die Zustellung der Nachrichten zwischen den Softwarekomponenten übernimmt. Dessen Verhalten wird, den Phasen entsprechend, im Folgenden beschrieben:
- Ausgangs- und Endphase (z.B. Fig. 2, Phase P1 und P3):
   In diesen Phasen werden die Daten lediglich durchgestellt. Entscheidungen sind nicht notwendig.
- Phasen mit zwei Versionen von Softwarekomponenten (z.B. Fig. 2, Übergangsphasen P2, P2'):

Hier unterscheiden wir zwischen ankommenden und ausgehenden Daten: Ausgehende Daten (Sendedaten): Ausgehende Daten werden hier nicht zugestellt, um die Synchronisierung der Softwarekomponente zu ermöglich, ohne dass diese Einfluss auf den Rest des Systems hat. Ankommende Daten (Empfangsdaten): Ankommende Daten werden der Softwarekomponente immer zugestellt, um eine Synchronisation zu ermöglichen.

Phasen, in denen alle Softwarekomponenten in allen Versionen im System vorliegen und synchronisiert sind (z.B. Fig. 2, Übergangsphase P2"): In diesem Fall kann die Kommunikation auf die neue Version umgestellt werden. Um dies zu detektieren ist es ggf. erforderlich den Kommunikationsmechanismus extern zu triggern. Da der Kommunikationsmechanismus typischerweise eng mit der Laufzeitumgebung und dem Update-Mechanismus verbunden sind (Laufzeitumgebung & Middleware), stellt dies in den meisten Systemen kein Problem dar.

Insgesamt zeigen die Beispiele, wie durch die Erfindung ein sicheres Update von sicherheitskritischen Systemen im Betrieb erfolgen kann.

## Patentansprüche

1. Verfahren zum Durchführen eines Updates einer Softwareapplikation (11) in einem Gerät (10), das sich im Betrieb befindet, wobei
eine in dem Betrieb bereits laufende Altversion (V1) einer Softwarekomponente (12) der Softwareapplikation (11) betrieben wird und hierbei die Altversion (V1) über eine Kommunikationseinrichtung (14) Sendedaten (16) an zumindest eine Fremdapplikation (15) des Geräts (10) oder eines anderen Geräts aussendet und
währenddessen in einer Übergangsphase (P2) eine Neuversion (V2) der Softwarekomponente (12) in einen Speicher (S) des Geräts (10) abgespeichert und danach ausgeführt wird, wobei Sendedaten (16') der Neuversion (V2) durch die Kommunikationseinrichtung (14) blockiert werden,
und nachdem die Neuversion (V2) einen vorbestimmten Synchronisationszustand (22) bezüglich der Altversion (V1) eingenommen hat und noch während des Betriebs des Geräts (10) in einem Umschaltvorgang (21)
a) die Altversion deaktiviert und/oder durch die Kommunikationseinrichtung (14) die Sendedaten (16) der Altversion blockiert werden und
b) durch die Kommunikationseinrichtung (14) die Sendedaten (16') der Neuversion (V2) an die zumindest eine Fremdapplikation (15) durchgelassen werden,
**dadurch gekennzeichnet, dass**
in der zumindest einen Fremdapplikation (15) ebenfalls eine jeweilige Neuversion (V2) einer dort betriebenen Softwarekomponente (19) gespeichert und danach ausgeführt wird, wobei durch eine dortige Kommunikationseinrichtung (18) in einer dortigen Übergangsphase (P2') die Sendedaten (17) einer Altversion (V1) der dortigen Softwarekomponente (19) weiterhin durchgelassen und Sendedaten (17') der Neuversion (V2) blockiert werden und erst wenn alle Neuversionen (V2) den Synchronisationszustand (22) eingenommen haben, jede Kommunikationseinrichtung (14, 18) den Umschaltvorgang (21) durchführt; wobei die Sendedaten (16) der Altversionen (V1) einerseits und die Sendedaten (16', 17') der Neuversionen (V2) andererseits zueinander inkompatibel sind.

2. Verfahren nach Anspruch 1, wobei die Kommunikationseinrichtung (14) Empfangsdaten (17) aus der zumindest einen Fremdapplikation (15) empfängt und die Kommunikationseinrichtung (14) die Empfangsdaten (17) sowohl an die Altversion (V1) als auch an die Neuversion (V2) weiterleitet.

3. Verfahren nach einem der vorhergehenden Ansprüche, wobei der Synchronisationszustand (22) umfasst, dass vorbestimmte Zustandsdaten der Neuversion (V2) korrespondierenden Zustandsdaten der Altversion (V1) gemäß einem vorbestimmten Übereinstimmungskriterium entsprechen.

4. Verfahren nach einem der vorhergehenden Ansprüche, wobei der Synchronisationszustand (22) umfasst, dass die Neuversion (V2) gemäß einem vorbestimmten Prüfkriterium fehlerfrei läuft.

5. Verfahren nach einem der vorhergehenden Ansprüche, wobei der Synchronisationszustand (22) eingestellt wird:
- durch Übertragen von Initialisierungsdaten von der Altversion (V1) in die Neuversion (V2); und/oder
- durch einen passiven Betrieb der Neuversion(V2), in welchem die Sendedaten (16') der Neuversion (V2) blockiert sind und die Neuversion (V2) dieselben Eingangsdaten erhält wie die Altversion und in welchem die Neuversion (V2) einen inneren Zustand an denjenigen der Altversion (V1) anhand der Eingangsdaten angleicht.

6. Verfahren nach einem der vorhergehenden Ansprüche, wobei vor dem Update außerhalb des Geräts (10) eine Sicherheitsverifikation der Übergangsphase durchgeführt wird.

7. Gerät (10) mit einer Prozessoreinrichtung (P) zum Betreiben zumindest einer Softwareapplikation (11), **dadurch gekennzeichnet, dass** das Gerät (10) dazu eingerichtet ist, ein Verfahren nach einem der Ansprüche 1 bis 5 durchzuführen.

8. Kraftfahrzeug (13) mit zumindest einem Gerät (10) nach Anspruch 7.

## Claims

1. Method for carrying out an update to a software application (11) in a device (10) which is in operation, wherein
an old version (V1) of a software component (12) of the software application (11), which old version is already running in operation, is operated and wherein the old version (V1) transmits transmission data (16) to at least one third-party application (15) of the device (10) or of another device via a communication apparatus (14) and,
meanwhile, in a transition phase (P2), a new version (V2) of the software component (12) is saved in a memory (S) of the device (10) and then executed, wherein transmission data (16') of the new version (V2) are blocked by the communication apparatus (14),
and after the new version (V2) has assumed a predetermined synchronisation state (22) in respect of the old version (V1) and while the device (10) is still in operation, in a changeover process (21)
a) the old version is deactivated and/or the transmission data (16) of the old version are blocked by the communication apparatus (14) and
b) the transmission data (16') of the new version (V2) are allowed through to the at least one third-party application (15) by the communication apparatus (14),
**characterised in that**,
in the at least one third-party application (15), a respective new version (V2) of a software component (19) operated there is also stored and is then executed, wherein the transmission data (17) of an old version (V1) of the software component (19) there continue to be allowed through by a communication apparatus (18) there in a transition phase (P2') there and transmission data (17') of the new version (V2) are blocked and only when all new versions (V2) have assumed the synchronisation state (22) does each communication apparatus (14, 18) carry out the changeover process (21), wherein
the transmission data (16) of the old versions (V1) on the one hand and the transmission data (16', 17') of the new versions (V2) on the other hand are incompatible with one another.

2. Method according to claim 1, wherein the communication apparatus (14) receives received data (17) from the at least one third-party application (15) and the communication apparatus (14) forwards the received data (17) both to the old version (V1) and to the new version (V2).

3. Method according to any of the preceding claims, wherein the synchronisation state (22) comprises the fact that predetermined state data of the new version (V2) match corresponding state data of the old version (V1) according to a predetermined matching criterion.

4. Method according to any of the preceding claims, wherein the synchronisation state (22) comprises the fact that the new version (V2) runs error-free according to a predetermined check criterion.

5. Method according to any of the preceding claims, wherein the synchronisation state (22) is set:
- by transferring initialisation data from the old version (V1) to the new version (V2); and/or
- by a passive operation of the new version (V2) in which the transmission data (16') of the new version (V2) are blocked and the new version (V2) receives the same input data as the old version and in which the new version (V2) adjusts an internal state to that of the old version (V1) on the basis of the input data.

6. Method according to any of the preceding claims, wherein a security verification of the transition phase is carried out outside the device (10) before the update.

7. Device (10) having a processor apparatus (P) for operating at least one software application (11), **characterised in that** the device (10) is configured to carry out a method according to any of claims 1 to 5.

8. Motor vehicle (13) having at least one device (10) according to claim 7.

## Revendications

1. Procédé pour réaliser une mise à jour d'une application logicielle (11) dans un appareil (10) qui fonctionne, dans lequel une ancienne version (V1) d'un composant logiciel (12) de l'application logicielle (11) existant dans le fonctionnement fonctionne et en l'occurrence l'ancienne version (V1) envoie des données d'envoi (16) via un dispositif de communication (14) à au moins une application externe (15) de l'appareil (10) ou d'un autre appareil et
pendant ce temps dans une phase de transition (P2) une nouvelle version (V2) du composant logiciel (12) est mise en mémoire dans une mémoire (S) de l'appareil (10) et ensuite exécutée, dans lequel des données d'envoi (16') de la nouvelle version (V2) sont bloquées par le biais du dispositif de communication (14),
et après que la nouvelle version (V2) est entrée dans un état de synchronisation prédéterminé (22) concernant l'ancienne version (V1) et encore pendant le fonctionnement de l'appareil (10) dans un processus de commutation (21)
a) l'ancienne version (V2) est désactivée et/ou par le biais du dispositif de communication (14) les données d'envoi (16) de l'ancienne version sont bloquées et
b) par le biais du dispositif de communication (14) les données d'envoi (16') de la nouvelle version (V2) sont transmises à l'au moins une application externe (15),
**caractérisé en ce que**
dans l'au moins une application externe (15) une nouvelle version (V2) respective d'un composant logiciel (19) qui y fonctionne est également mise en mémoire et ensuite exécutée, dans lequel par le biais d'un dispositif de communication (18) qui s'y trouve dans une phase de transition (P2') qui s'y trouve les données d'envoi (17) d'une ancienne version (V1) du composant logiciel (19) qui s'y trouve sont également transmises et des données d'envoi (17') de la nouvelle version (V2) sont bloquées et ce n'est que lorsque toutes les nouvelles versions (V2) ont adopté l'état de synchronisation (22) que chaque dispositif de communication (14, 18) réalise le processus de commutation (21) ; dans lequel les données d'envoi (16) des anciennes versions (V1) d'un côté et les données d'envoi (16' 17') des nouvelles versions (V2) d'un autre côté sont incompatibles entre elles.

2. Procédé selon la revendication 1, dans lequel le dispositif de communication (14) reçoit des données de réception (17) en provenance de l'au moins une application externe (15) et le dispositif de communication (14) retransmet les données de réception (17) aussi bien à l'ancienne version (V1) qu'à la nouvelle version (V2).

3. Procédé selon l'une des revendications précédentes, dans lequel l'état de synchronisation (22) comprend le fait que des données d'état correspondant à des données d'état prédéterminées de la nouvelle version (V2) sont conformes à l'ancienne version (V1) selon un critère de conformité prédéterminé.

4. Procédé selon l'une des revendications précédentes, dans lequel l'état de synchronisation (22) comprend le fait que la nouvelle version (V2) selon un critère de vérification prédéterminé fonctionne correctement.

5. Procédé selon l'une des revendications précédentes, dans lequel l'état de synchronisation (22) est réglé :
- par le biais d'un transfert de données d'initialisation de l'ancienne version (V1) dans la nouvelle version (V2) ; et/ou
- par le biais d'un fonctionnement passif de la nouvelle version (V2), dans lequel les données d'envoi (16') de la nouvelle version (V2) sont bloquées et la nouvelle version (V2) reçoit les mêmes données d'entrée que l'ancienne version et dans lequel la nouvelle version (V2) ajuste un état interne au niveau de celui de l'ancienne version (V1) à l'aide des données d'entrée.

6. Procédé selon l'une des revendications précédentes, dans lequel avant la mise à jour à l'extérieur de l'appareil (10) une vérification de sécurité de la phase de transition est réalisée.

7. Appareil (10) avec un dispositif à processeur (P) pour le fonctionnement d'au moins une application logicielle (11), **caractérisé en ce que** l'appareil (10) est conçu pour réaliser un procédé selon l'une des revendications 1 à 5.

8. Véhicule (13) avec au moins un appareil (10) selon la revendication 7.
